Europäisches Patentamt

European Patent Office

Office européen des brevets

(11) Veröffentlichungsnummer: **0 203 249 B1**

(12) **EUROPÄISCHE PATENTSCHRIFT**

(45) Veröffentlichungstag der Patentschrift: **08.04.92**

(21) Anmeldenummer: **86100339.0**

(22) Anmeldetag: **13.01.86**

(51) Int. Cl.⁵: **H01B 9/00**, H01B 7/32, G02B 6/44

(54) **Starkstromkabel, insbesondere für Spannungen von 6 bis 60 kV, mit eingelegten Lichtwellenleitern.**

(30) Priorität: **25.05.85 DE 3518909**

(43) Veröffentlichungstag der Anmeldung:
**03.12.86 Patentblatt 86/49**

(45) Bekanntmachung des Hinweises auf die
Patenterteilung:
**08.04.92 Patentblatt 92/15**

(84) Benannte Vertragsstaaten:
**AT BE CH DE FR GB IT LI NL SE**

(56) Entgegenhaltungen:
**EP-A- 0 100 694**
**DE-A- 2 801 231**
**DE-A- 3 305 234**

**PATENT ABSTRACTS OF JAPAN, Band 5, Nr.
177 (P-89)[849], 13. November 1981; & JP-
A-56 106 208**

(73) Patentinhaber: **Felten & Guilleaume Energietechnik AG
Schanzenstrasse 24-30 Postfach 80 50 01
W-5000 Köln 80(DE)**

(72) Erfinder: **Hahne, Gerd, Dipl.-Ing.
Hoppersheider Weg
W-5060 Bergisch Gladbach 2(DE)**
Erfinder: **Noack, Georg, Dr.-Ing.
Eschenweg 9
W-5060 Bergisch Gladbach 2(DE)**
Erfinder: **Harjes, Bernd, Dr.-Ing.
Hahnenbusch 10
W-5060 Bergisch Gladbach 2(DE)**
Erfinder: **Levacher, Friedrich Karl, Dr.
Medardusstrasse 24
W-5042 P. Brauweiler(DE)**

**Beschreibung**

Die Erfindung betrifft ein Starkstromkabel, insbesondere fur Spannungen von 6 bis 60 kV, mit a) mindestens einem Energieleiter, einer Leiterisolierung und einem Außenbereich, der den Kabelmantel und die darunterliegenden Elemente, wie Schirm, Bewicklung oder Bewehrung, umfaßt, und b) mit in dem Kabel eingelegten, der Nachrichtenübermittlung dienenden Lichtwellenleitern (LWL), die von einer schützenden Kunststoffhülle umgeben sind.

Die Erfindung geht von der DE-A-28 01 231 aus, worin eine mehradrige Elastomere-isolierte, Elastomere-ummantelte Starkstromtrosse beschrieben ist, bei der die Adern mit kurzer Schlaglänge verseilt sind, und bei der in wenigstens einem der zwischen den Kabeladern gebildeten Außenzwickeln ein LWL-Fasern enthaltendes Verseilelement untergebracht ist. Die LWL befinden sich lose in biegsamen, schlauchförmigen, mehrschichtigen Kunststoffhüllen, die auf ein Kernelement aufgeseilt sind, und die gemeinsam von einer Hülle aus einem vorgereckten aromatischen Polyamid und einer lose sitzenden zweiten Hülle aus einem fluorieten Äthylen-Propylen-Copolymerisat umgeben sind. Eine solche Trosse dient zur Stromversorgung von Baggern, und sie ist zugleich zur Übertragung von Signalen (mittels der Nachrichten-LWL) eingerichtet.

Des weiteren ist in der EP-A-100 694 ein einadriges Hochspannungskabel beschrieben, in das mindestens ein Lichtwellenleiter eingelegt ist, der auf Veränderungen der Temperatur oder der Feuchtigkeit reagiert. Diese LWL-Sensoren sind im Schirm oder unterhalb des Schirms des Kabels - vorzugsweise zur Anzeige von eindringender Feuchtigkeit oberhalb einer Lage aus quellfähigem Band - angeordnet, und sie sind an ihren Enden mit Anzeige- bzw. Meßgeräten (Lichtsender und -empfänger) verbunden.

Ein LWL-Zugsensor allein ist in der DE-A-33 05 234 beschrieben. Er besteht aus einem zugfesten Draht (Mantel) aus einer faserverstärkten Harzstruktur mit einem darin eingeschlossenen LWL, wobei der LWL von einer Kunststoffschicht umgeben ist, die eine inhomogene Struktur hat. Dieser LWL-Sensor hat an seinen beiden Enden Anschlüsse für ein Licht-Durchgangsprüfgerät. Die Empfindlichkeit des Sensors wird dadurch verbessert, daß als inhomogene Zwischenschicht um den LWL mindestens eine Wendel eines Metalldrahtes oder eines Glasfadens gewickelt ist.

Der Erfindung liegt die Aufgabe zugrunde, die vorbeschriebenen Starkstromkabel mit eingelegten LWL als Mittelspannungskabel möglichst vielseitig einsetzbar, dabei jedoch einfach auszubilden.

Diese Aufgabe wird erfindungsgemäß dadurch gelöst, daß a) die von einem Mantel oder Rohr als Schutzhülle umgebenen Nachrichten-LWL im Energieleiter und/oder im Außenbereich des Kabels eingelegt sind, und daß b) mindestens ein Temperatur- und/oder Zugsensor-LWL, der von einer für den jeweiligen Sensorzweck spezifischen Umhüllung umgeben ist, im Energieleiter und/oder in einem Aderzwickel und/oder im Außenbereich des Kabels eingelegt ist.

Das erfindungsgemäße Kabel bietet dem Anwender eine Vielzahl erheblicher Vorteile, nämlich:

a) mittels Temperaturüberwachung: Überwachung der Belastung, Ausnutzen der Belastungsgrenze (Sicherheitszuschläge VDE), Kontrolle der Überlast, optimale Leistungsverteilung im Netz, Heiße-Stellen-Erkennung (Hot Spot), Fehler-Früherkennung und Messung der Stromstärke I (Spannung U),

b) mittels mechanischer Überwachung: Überwachung der Verlegekräfte (insbesondere bei Seekabeln) und der im Betrieb auftretenden Zugkräfte (insbesondere bei Bergbaukabeln), Feststellung von Kabelbeschädigungen (Kabelbruch), präzise Fehlerortung und automatische Fehleranzeige, und

c) die bekannte leistungsfähige Informationsübertragung: breitbandig und störungssicher für EDV, Video und erweiterte Schutzaufgaben (Fehlerortung).

Ein solches Kabel könnte man ein intelligentes Energiekabel nennen.

Weitere Ausgestaltungen des erfindungsgemäßen Kabels sind in den Unteransprüchen angegeben.

Mehrere Ausführungsbeispiele der Erfindung sind in der Zeichnung dargestellt und werden im folgenden näher beschrieben. Es zeigen

- Fig. 1 verschiedene Lichtwellenleiter - Nachrichten-LWL (NL), Temperatursensor-LWL (TS) und Zugsensor-LWL (ZS) - in einem ein- und einem dreiadrigen, PE-isolierten 10 kV-Kabel,
- Fig. 2 verschiedene LWL (NL, TS und ZS) mit ihrer Umhüllung,
- Fig. 3 verschiedene LWL in einem Energieleiter, und
- Fig. 4 das Einbringen der LWL in das geschlitzte Rohr in einem Arbeitsgang mit der Leiterverseilung.

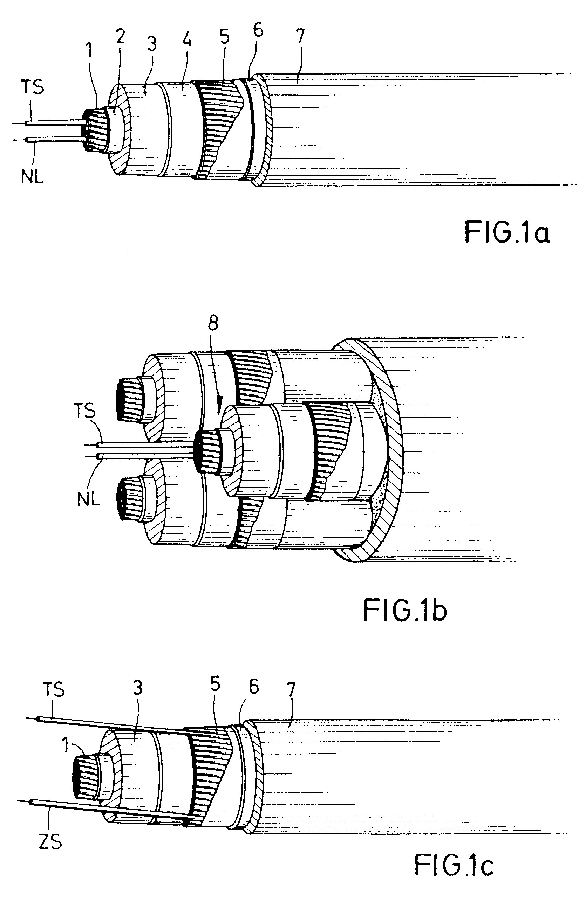

Fig. 1 zeigt die Unterbringung der verschiedenen LWL in einem Einleiter- und einem Dreileiterkabel für EVU-Netze (Netze der Energieversorgungsunternehmen). Der Energieleiter 1 besteht aus mehreren miteinander verseilten Runddrähten aus Al oder Cu. Die Isolierung 3 aus PE oder VPE (vernetztes Polyethylen) ist um den Leiter extrudiert und innen sowie außen von den, ebenfalls extrudierten, Leitschichten 2 und 4 umgeben. Und der Außenbereich des Kabels besteht aus dem Cu-Schirm 5, der Bandbewicklung 6 und dem Kabelmantel 7 aus PVC. - Beim Dreileiterkabel sind die drei Adern in der gleichen Art, jedoch ohne den Mantel, ausgebildet und miteinander verseilt. Die Aderzwickel 8 sind mit einer Kunststoffmischung ausgefüllt, die eine gemeinsame Adeumhüllung (Innenmantel) bildet, und darüber ist der Außenmantel aus PVC extrudiert. Zwischen den beiden Mänteln kann eine Bewehrung (Stahlbandwendel oder -geflecht) angeordnet sein. Soweit der übliche Aufbau.

Hinsichtlich der Erfindung zeigen nun

- Fig. 1a die Anordnung eines Temperatursensor-LWL TS und eines Nachrichten-LWL NL im Energieleiter 1 eines Einleiterkabels,
- Fig. 1b einen Temperatursensor-LWL TS und einen Nachrichten-LWL NL im inneren Aderzwickel 8 eines Dreileiterkabels, und
- Fig. 1c zwei Sensor-LWL im Schirm eines Einleiterkabels.

Hinsichtlich der verschiedenen Lichtwellenleiter zeigen

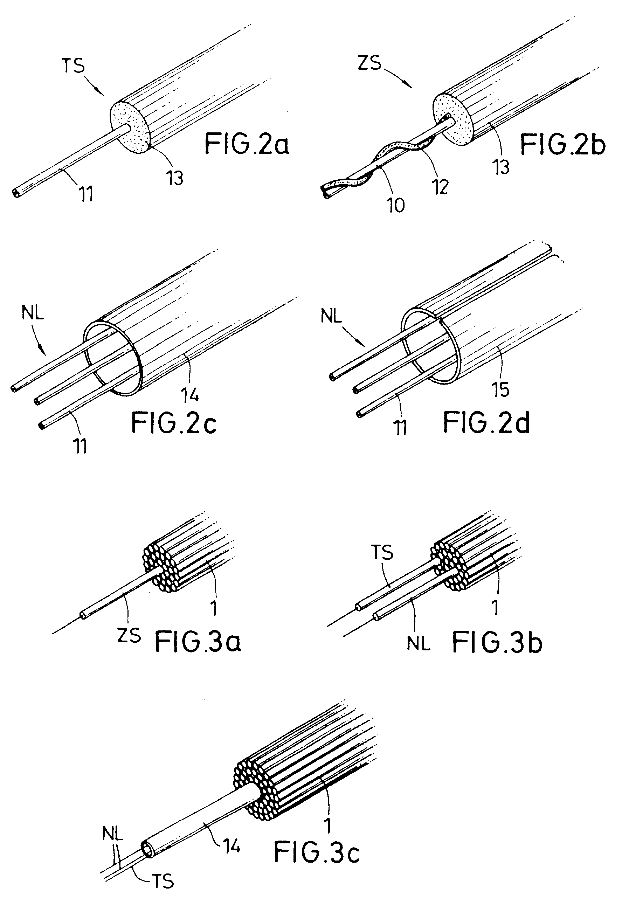

- Fig. 2a einen Temperatursensor-LWL TS mit dem Aufbau: primär- und sekundärbeschichteter LWL 11 und darum Schutzmantel 13 aus faserverstärktem Kunststoff,
- Fig. 2b einen Zugsensor-LWL ZS mit dem Aufbau; primärbeschichteter LWL 10, darum Drahtwendel 12 und darum Schutzmantel 13,
- Fig. 2c drei Nachrichten-LWL, primär- und sekundärbeschichtete LWL 11, lose vom Schutzrohr 14 umgeben, und
- Fig. 2d drei Nachrichten-LWL im längsgeschlitzten Schutzrohr 15.

Wie an die Enden der Nachrichten-LWL Sende- und Empfangsgeräte angeschlossen sind, so sind an das Empfangsende der Sensor-LWL Meß- und Regelgeräte zur Überwachung des Kabels und Steuerung seines Betriebs angeschlossen. Anschlüsse und Geräte, so die Meßgeräte für Licht-Durchgang, -Dämpfung und Reflexion, haben die übliche Ausführung. Die Temperatur- oder Zugwerte werden aus den Lichtwerten durch Eichung und Umrechnung ermittelt.

Fig. 3 zeigt die Unterbringung der verschiedenen LWL (NL, TS und ZS) im Energieleiter 1: Sie sind zwischen die Runddrähte des Leiters eingelegt und mit ihnen verseilt. Dabei sind die LWL von einer Schutzhülle (Mantel 13 oder Rohr 14) aus faserverstärktem Kunststoff umgeben.

Sollen die LWL biegsam sein, kann die LWL-Seele von einem PE-Mantel umgeben sein. Sollen sie hochbiegsam sein, können sie von einer biegsamen Schutzhülle umgeben und als Wendeln gewickelt sein, die so in einen hohlen Energieleiter oder in den Außenbereich des Kabels eingelegt werden.

Temperatursensor-LWL werden vorwiegend eingesetzt zur Ermittlung und Überwachung der Leiter- und der Manteltemperatur bei Kabeln für EVU-Netze und zur Steuerung des Betriebs dieser Kabel mit den zahlreichen, obenerwähnten Möglichkeiten. - Zugsensor-LWL werden vorwiegend eingesetzt zur Überwachung der Zugkräfte beim Verlegen von Seekabeln und beim Betrieb von mechanisch hoch belasteten Kabeln zum Anschluß ortsveränderlicher Großgeräte in Industrie und Bergbau, wie Leitungstrossen, Baggertrommelleitungen, Strossenleitungen und Schrämtrossen. - Und es können Sensor-LWL zur Überwachung des Öls oder Gases im Öl- oder Gasraum von Öl- oder Gasdruckkabeln eingelegt sein.

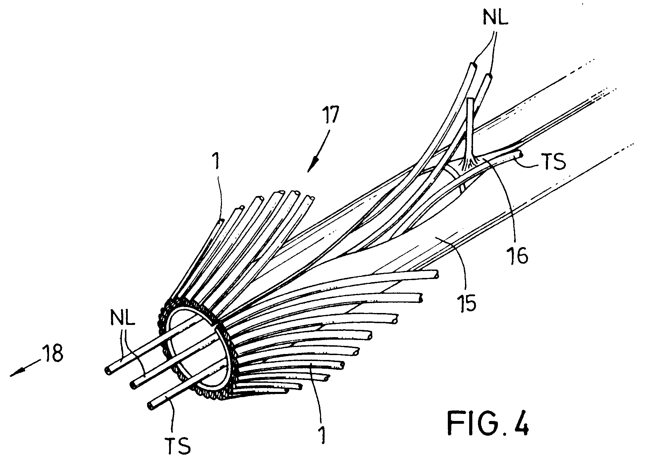

Schließlich zeigt Fig. 4 den Sonderfall, wie man durch Verwendung eines geschlitzten Schutzrohres 15 für die NL- und TS-LWL die Kabelfertigung vereinfachen kann, indem man nämlich die LWL in das Rohr in einem Arbeitsgang mit der Leiterverseilung einbringt. Dazu werden der Schlitz des Rohres 15 mit einem Werkzeug 16 aufgeweitet und die LWL von oben in das Rohr eingeführt. Dies erfolgt in einem Maschinenbereich, in dem die Runddrähte des Energieleiters 1 von der Verseilscheibe 17 kommen und zum Verseilnippel 18 laufen.

**Patentansprüche**

1. Starkstromkabel, insbesondere für Spannungen von 6 bis 60 kV,
   - mit mindestens einem Energieleiter (1), einer Leiterisolierung (3) und einem Außenbereich, der den Kabelmantel (7) und die darunterliegenden Elemente, wie Schirm (5), Bewicklung (6) oder Bewehrung, umfaßt,
   - und mit in dem Kabel eingelegten, der Nachrichtenübermittlung dienenden Lichtwellenleitern, die von einer schützenden Kunststoffhülle umgeben sind, **dadurch gekennzeichnet**,
   - daß die von einem Mantel oder Rohr als Schutzhülle umgebenen Nachrichten-Lichtwellenleitern (NL)im Energieleiter (1) und/oder im Außenbereich (5-7) des Kabels eingelegt sind,
   - und daß mindestens ein Temperatur- und/oder Zugsensor-Lichtwellenleiter (TS, ZS), der von einer für den jeweiligen Sensorzweck spezifischen Umhüllung umgeben ist, im Energieleiter (1) und/oder in einem Aderzwickel (8) und/oder im Außenbereich (5-7) des Kabels eingelegt ist.

**2.** Starkstromkabel nach Anspruch 1, **dadurch gekennzeichnet**, daß die im Energieleiter (1) eingelegten Lichtwellenleitern (NL, TS, ZS) von einer Schutzhülle (13, 14) aus faserverstärktem Kunststoff umgeben sind.

**3.** Starkstromkabel nach Anspruch 1 oder 2, **dadurch gekennzeichnet**, daß, die von einer Schutzhülle umgebenen Nachrichten-Lichtwellenleitern und Sensor-Lichtwellenleitern Wendeln gewickelt sind und so in einem hohlen Energieleiter (1) oder im Außenbereich (5-7) des Kabels eingelegt sind.

**4.** Starkstromkabel nach Anspruch 1 oder 2, **dadurch gekennzeichnet**, daß das Schutzrohr (15) einen Längsschlitz zum Einbringen der Lichtwellenleiter in das Rohr in einem Arbeitsgang mit der Leiterverseilung hat.

**Claims**

**1.** A power cable, in particular for voltages from 6 to 60 kV,
   - having at least one energy conductor (1), conductor insulation (3) and an external region which comprises both the cable sheath (7) and the elements thereunder such as shield (5), wrapping (6) or armouring,
   - and having light-wave-guides which are inserted in the cable, serve to transmit information and are surrounded by a protective plastics covering, characterized
   - in that the information light-wave-guides (NL) surrounded by a sheath or pipe as a protective covering are inserted in the energy conductor (1) and/or in the external region (5-7) of the cable,
   - and in that at least one temperature sensor and/or tension light-wave-guide (TS, ZS), surrounded by a jacket specific to the sensor purpose in question, is inserted in the energy conductor (1) and/or in a wire filler (8) and/or in the external region (5-7) of the cable.

**2.** A power cable in accordance with Claim 1, characterized in that the light-wave-guides (NL, TS, ZS) inserted in the energy conductor (1) are surrounded by a protective covering (13, 14) of a fibre-reinforced plastics material.

**3.** A power cable in accordance with Claim 1 or 2, characterized in that the information light-wave-guides and sensor light-wave-guides, surrounded by a protective covering, are wound as spirals and like this are inserted in a hollow energy conductor (1) or in the external region (5-7) of the cable.

**4.** A power cable in accordance with Claim 1 or 2, characterized in that the protective pipe (15) has a longitudinal slit for the introduction of the light-wave-guide into the pipe in one operation with the conductor stranding.

**Revendications**

**1.** Câble de courant fort, en particulier pour tensions de 6 à 60 kV,
   - avec au moins un conducteur d'énergie (1), une isolation du conducteur (3), et une zone extérieure, qui comprend l'enveloppe du câble (7) et les éléments qui se trouvent en dessous, tels que le bobinage (5), l'enroulement (6) ou l'armure.
   - et avec des conducteurs de lumière incorporés dans le câble qui servent à la transmission des informations, qui sont entourés d'une gaine en matière plastique de protection,
   câble de courant fort caractérisé en ce que :
   - les conducteurs de lumière NL d'informations entourés d'une enveloppe ou d'un tube, en tant que gaine de protection, sont incorporés dans le conducteur d'énergie (1) et/ou la zone extérieure (5 - 7) du câble,
   - et au moins un capteur de température et/ou d'étirement en tant que conducteur de lumière (TS, ZS) qui est entouré d'une gaine de protection spécifique pour chaque application respective du capteur, est incorporé dans le conducteur d'énergie (1) et/ou dans un interstice de bourrage (8) entre les brins et/ou dans la zone extérieure (5 - 7) du câble.

**2.** Câble de courant fort selon la revendication 1, caractérisé en ce que les conducteurs de lumière (NL, TS, ZS) incorporés dans le conducteur d'énergie (1) sont entourés d'une gaine de protection (13, 14) en matière plastique renforcée par des fibres.

**3.** Câble de courant fort selon la revendication 1 ou 2, caractérisé en ce que les conducteurs de lumière pour information et les conducteurs de lumière pour détection entourés d'une gaine de protection, sont enroulés en hélice et sont ainsi incorporés dans un conducteur d'énergie (1) creux ou dans la zone extérieure (5 - 7) du câble.

4. Câble de courant fort selon la revendication 1 ou 2, caractérisé en ce que le tube de protection (15) présente une fente longitudinale pour loger les conducteurs de lumière dans le tube au cours d'une phase de fabrication du câblage du conducteur d'énergie.

FIG.1a

FIG.1b

FIG.1c

FIG.2a

FIG.2b

FIG.2c

FIG.2d

FIG.3a

FIG.3b

FIG.3c

FIG. 4